# EUROPEAN PATENT APPLICATION

(11) **EP 2 247 145 A1**
(43) Date of publication of application: **03.11.2010**
(21) Application number: 09158932.5
(22) Date of filing: 28.04.2009
(51) Int. Cl.: H04W 52/02, H04W 68/00, H04W 84/18

(54) **Paging in a cellular communication system**

(71) Applicant: Motorola, Inc., Schaumburg, IL 60196 (US)
(72) Inventor: Benn, Howard, Swindon Wiltshire SN4 8EB (GB); Wu, Jim, Reading, Berkshire RG6 4EY (GB)
(74) Representative: Jepsen, René Pihl

(57) **Abstract**

A cellular communication system comprises a user equipment (101) which is arranged to transmit control channel messages to a network (103) of the communication system. When a message is transmitted, the user equipment (101) enters an active monitoring mode for a time interval after which it returns to the power-down mode. The user equipment (101) monitors a paging channel when in the active monitoring mode but not in all paging cycles when in the power-down mode. The network (103) is arranged to transmit paging messages in response to a detection of the control channel message from the user equipment (101). The invention may allow a much longer power-down interval thereby reducing power consumption and increasing battery life. The approach may be particularly suitable for machine-to-machine communications.

## Description

### Field of the invention

The invention relates to paging in a cellular communication system and in particular, but not exclusively, to paging of user equipments in a Global System for Mobile communication (GSM) cellular communication system.

### Background of the Invention

Cellular communication systems have become increasingly widespread and are being used to provide communication resources and services for an increasing variety of applications. Recently, there has been an increased interest in using cellular communication systems for machine-to-machine communication (also referred to as M2M communication). Such machine type communication is a form of data communication that involves one or more entities that do not necessarily need human interaction. For example, a number of weather monitoring stations may be deployed in a range of locations to gather meteorological data that is transmitted back to a central server using a cellular communication system.

However cellular communication systems have traditionally been designed and optimised for human-to-human communications (and more recently also for human-to-machine communications). As a result they tend to be suboptimal for machine-to-machine type communications. However, in order to fully exploit the potential market for machine-to-machine communications, it is important to provide an optimised service. For example, it is important for network operators to provide an efficient, low cost and practical system in order to attract customers to a machine-to-machine offering.

Many machine-to-machine applications tend to be characterized by a low data communication requirement. Indeed, a substantial number of machine-to-machine applications only require extremely small amounts of data to be exchanged (e.g. the requirement is often extremely low for uplink data, downlink data or both uplink and downlink data). For example, for many machine-to-machine applications the data communication requirements are in the range of only hundreds of bytes per month. As the design preferences and requirements for such low data rate communications is often substantially different from the requirements for relative high data rate communications (such as for a voice service), most cellular communication system services tend to be suboptimal for machine-to-machine applications.

A critical parameter for many machine-to-machine applications is the power consumption of the deployed unit. Indeed, for many machine-to-machine applications, the deployed communication unit is battery driven and accordingly the battery life and the power drain is of the utmost importance. However, current cellular communication systems have not been optimized for efficient power consumption for extremely low data rate applications, and therefore the battery life for machine-to-machine user equipment tends to be less than desired.

Hence, an improved approach would be advantageous and in particular an approach allowing increased flexibility, reduced power consumption, facilitated operation, improved backwards compatibility, improved suitability for machine-to-machine communications and/or increased performance would be advantageous.

### Summary of the Invention

Accordingly, the Invention seeks to preferably mitigate, alleviate or eliminate one or more of the above mentioned disadvantages singly or in any combination.

According to a first aspect of the invention there is provided user equipment for a cellular communication system, the user equipment comprising: means for generating a control channel message; a transmitter for transmitting the control channel message to a network of the cellular communication system; means for entering the user equipment into an active monitoring mode for a time interval in response to the transmission of the control channel message, power-down means for entering the user equipment into a power-down mode at the end of the time interval for a period longer than a paging cycle; and monitoring means arranged to monitor a paging channel for paging messages when in the active monitoring mode, and to not monitor the paging channel in all paging cycles when in the power-down mode.

The invention may provide improved performance in a cellular communication system and may in particular provide an increased battery life and reduced power consumption. The invention may in particular increase the stand-by time for user equipments. The invention may provide particularly advantageous performance for low data rate applications, such as many machine-to-machine applications.

The invention may allow improved performance while maintaining a high degree of backwards compatibility. In particular, the advantages may be achieved for many communication systems without necessitating change of the standardised signalling operations or messages. In particular, the air interface communications may be compatible with already standardised air interface communications.

The Inventors have realised that one of the most significant power drains for low data amount communications is the frequent monitoring of paging channels. Indeed, as data need only be communicated very rarely, the requirement to monitor paging channels frequently prevents the user equipment from remaining in a power-down mode for extended durations. The Inventors have furthermore realised that improved performance can be achieved by restricting the time in which the user equipments monitor the paging channel to specific time intervals. The Inventors have furthermore realised that such a system can be achieved by using a control channel message to indicate to the network when the user equipment is available to receive paging messages. Thus, the invention may allow paging message synchronisation between the network and the user equipment by using a control channel message. The control channel message may furthermore be a message that already exists and is communicated for other purposes thereby resulting in reduced complexity and avoiding the requirement for changing the standards to encompass a new synchronisation message.

The paging cycle may specifically be a paging cycle signalled to the user equipment from network. The paging cycle may e.g. be the time between the start (or end) of subsequent time windows (tine slots) in which the network can send paging messages to the user equipment.

The user equipment may be in the power-down mode prior to entering the active monitoring mode, i.e. it may enter the active monitoring mode directly from the power-down mode. In some examples, the user equipment may be arranged to further operate in other operational modes than the power-down mode and the active monitoring mode in all or part of a time from exiting the power-down mode until entering the active monitoring mode. In some examples, the user equipment may only operate in either the active monitoring mode or the power-down mode. In some such embodiments, the user equipment may only be arranged to enter the active monitoring mode in response to transmission of the control channel message. However, in some other such embodiments, the user equipment may also be arranged to enter the active monitoring mode at other times, and e.g. without the control channel message being sent.

In some embodiments, the monitoring means may be arranged to not monitor the paging channel when in the power-down mode. Thus, in such embodiments, the paging channel will not be monitored during any paging cycles when in the power-down mode

According to another aspect of the invention there is provided a network for a cellular communication system comprising: means for detecting that a control channel message is received by the network from a user equipment; and paging means arranged to transmit a paging message to the user equipment in a predetermined time interval following detection of the control channel message.

According to another aspect of the invention there is provided a cellular communication system comprising a network and at least one user equipment, wherein the at least one user equipment comprises: means for generating a control channel message, a transmitter for transmitting the control channel message to a network of the cellular communication system, means for entering the user equipment into an active monitoring mode for a time interval in response to the transmission of the control channel message, power-down means for entering the user equipment into a power-down mode at the end of the time interval for a period longer than a paging cycle, and monitoring means arranged to monitor a paging channel for paging messages when in the active monitoring mode, and to not monitor the paging channel in all paging cycles when in the power-down mode; and the network comprises: means for detecting that the control channel message is received by the network, and means arranged to transmit a paging message to the user equipment in response to a detection of the control channel message.

According to another aspect of the invention there is provided a method of operation for a user equipment for a cellular communication system, the method comprising: generating a control channel message; transmitting the control channel message to a network of the cellular communication system; entering the user equipment into an active monitoring mode for a time interval in response to the transmission of the control channel message, entering the user equipment into a power-down mode at the end of the time interval for a period longer than a paging cycle; and monitoring a paging channel for paging messages when in the active monitoring mode, and not monitoring the paging channel in all paging cycles when in the power-down mode.

According to another aspect of the invention there is provided a method of operation for a network of a cellular communication system comprising: detecting that a control channel message is received by the network from a user equipment; and transmitting a paging message to the user equipment in a predetermined time interval following detection of the control channel message.

These and other aspects, features and advantages of the invention will be apparent from and elucidated with reference to the embodiment(s) described hereinafter.

### Brief Description of the Drawings

Embodiments of the invention will be described, by way of example only, with reference to the drawings, in which
FIG. 1 is an illustration of elements of a cellular communication system; and
FIG. 2 is an illustration of elements of user equipment for a cellular communication system.

### Detailed Description of Some Embodiments of the Invention

The following description focuses on embodiments of the invention applicable to a GSM cellular communication system. However, it will be appreciated that the invention is not limited to this application but may be applied to many other cellular communication systems.

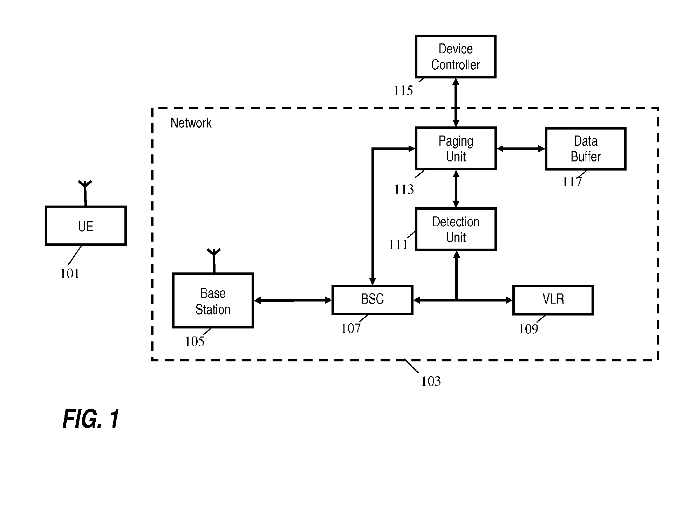

FIG. 1 illustrates an example of a cellular communication system. In the example, the cellular communication system is a GSM cellular communication system which supports a plurality of user equipments. A user equipment may be any communication entity capable of communicating with a base station (or access point) over the air interface including e.g. a mobile phone, a mobile terminal, a mobile communication unit, a remote station, a subscriber unit, a 3G User Equipment etc.

For brevity and clarity, FIG. 1 illustrates only elements of the cellular communication system required for the following description. However, it will be appreciated that a deployed GSM cellular communication system will include many other functions and elements, including other user equipments, base stations, Home Location Registers (HLRs), Mobile Switching Centres (MSCs) etc.

In particular, FIG. 1 illustrates a single user equipment 101 which is arranged to communicate with a network 103 of the cellular communication system over an air interface of the cellular communication system. It will be appreciated that practical cellular communication system comprise a large number of user equipments.

Thus, the cellular communication system may be considered to be represented by a network domain comprising the network 103 and a user equipment domain comprising the user equipments 101. The two domains are coupled together and interoperate via the air interface.

In the example, the user equipment 101 supports a machine-to-machine communication service which is supported by the network. It will be appreciated that the illustrated user equipment 101 may be considered to include the actual device supported by the service or may be considered to provide a communication service to an external device. For example, the user equipment 101 may be considered to include weather station functionality or may be considered to merely provide a communication service to an external weather station.

In FIG. 1, a base station 105 of the network 103 supporting the user equipment 101 is illustrated. The base station 105 is coupled to a Base Station Controller (BSC) 107 which controls a plurality of base stations in the system (of which only one is illustrated in FIG. 1). The BSC 107 is arranged to control base stations and perform many control and resource functions associated with the air interface communications as will be well known to the skilled person. The BSC 107 is furthermore directly or indirectly coupled to a range of other network elements including other BSC 107s, MSCs etc. as will be known to the person skilled in the art.

FIG. 1 specifically illustrates the BSC 107 being coupled to a Visitor Location Register (VLR) 109 which is a database that stores information about the user equipments that are currently served by the MSC that it supports. The information stored in a VLR includes the location of the user equipments in the network and specifically it stores the current LAI (Location Area Identity) for each user equipment currently served by the MSC.

In the system the user equipment 101 is used for machine-to-machine communications and has a very low data communication requirement. For example, the user equipment 101 may support a weather station reporting only, say, 1 kbyte of data per day. Furthermore, the user equipment 101 may be deployed where mains powered operation is not feasible or practical and may accordingly be battery powered. For example, the weather station may be located in a field. Accordingly, it is essential that the user equipment 101 has very low average power consumption.

However, although conventional user equipments utilise various power saving techniques, the typical operation tends to prevent this power reduction to be optimised. Indeed, the inventors have realised that a main obstacle for reducing power consumption for e.g. user equipments supporting machine-to-machine communications is the employed paging operation.

Indeed, in current cellular communication systems, the user equipments may temporarily enter power-down modes wherein a number of functions may be switched off. For example, the power to some or all elements of the receiver may be switched of. However, in current systems, the user equipments must wake up and monitor the paging channel regularly in order to detect whether any paging messages are transmitted to the user equipment.

For example, in GSM, the parameter BA_PA_MFRMS indicates how often the user equipment will power up the receive circuitry to monitor for paging messages. The BA_PA_MFRMS can be varied from 2 - 951 multiframe periods = 0.47 - 2.1 seconds. Thus, the user equipment is required to exit the power-down mode at least every 2.1 seconds in order to detect if the network is trying to initiate a communication by sending a paging message to the user equipment. The inventors have realised that this is a major factor in preventing optimised power consumption and is particularly unsuitable for machine-to-machine applications where paging messages may be transmitted with intervals of perhaps several days or weeks.

Furthermore, merely extending the time interval between paging channel measurements would require that the existing deployed infrastructure would need to be modified. As this is very complex, resource demanding and costly to do, any such approach is impractical and is unlikely to be employed by the operators or indeed included in the technical specifications for the cellular communication system.

In the system of FIG.1, the issue is addressed by not only limiting the time in which the user equipment monitors the paging channel but also by synchronising the paging operation of the network to the timing of the monitoring of the paging channel by the user equipment. Furthermore, this synchronisation is achieved using uplink control channel messages transmitted from the user equipment to the network. The uplink control channel messages can specifically be control channel messages that are transmitted for other purposes, with the paging operation of the user equipment and the network being synchronised to these messages. For example, the control channel messages may be periodical update messages, such as for example a periodic location update message.

For example, the user equipment 101 may be a static user equipment that transmits a location update periodically (e.g. once or twice per day). After transmitting the periodic location update, the user equipment 101 may proceed to monitor the paging channel for paging messages for a time interval of e.g. N paging cycles. If no paging messages are received by the end of this period, the user equipment 101 will return to the power-down mode for at least one paging cycle but typically until next time a periodic location update is transmitted.

The location update message is transmitted to the VLR 109 and may be detected in the network 103. The network 103 may then ensure that any paging messages will be sent to the user equipment 101 in the specific time interval in which the user equipment 101 is monitoring the paging channel.

Thus, the system allows for an efficient paging operation while at the same time allowing the user equipment 101 to remain in the power-down mode for extended time periods and requiring it only to very occasionally wake up to monitor the paging channel.

Furthermore, the approach does not require modification of the basic radio access network operation as no changes to signaling are required. Furthermore, no modification to existing network elements is required and the approach can indeed be implemented merely by adding additional functionality to the network. Indeed, the network may merely be enhanced by the addition of functionality for detecting the control channel message, for controlling when the paging message is transmitted and possibly for buffering data for the user equipment 101 until the next monitoring period.

The approach may in particular provide advantageous performance for machine-to-machine applications since a substantial reduction in the power consumption of the user equipment 101 can be achieved while at the same time providing efficient support for extremely low data rate and time non-critical applications.

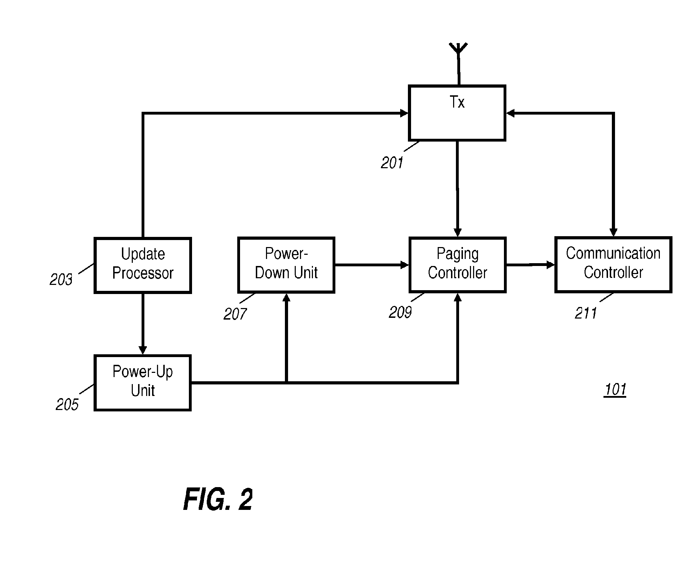

FIG. 2 illustrates elements of the user equipment 101.

The user equipment 101 comprises a transceiver 201 which is arranged to communicate with the base station 105 over the air interface of the cellular communication system.

The transceiver 201 is coupled to an update processor 203 which is arranged to generate a control channel message and feed it to the transceiver 201 for transmission to the base station 105/ network 103.

In the specific example, the update processor 203 monitors the location information transmitted by the base station 105, if this information indicates a different location or routing area than that stored from the previous base station then a message is sent to the network 103. Specifically, the control channel message is a location update message.

In GSM, an idle user equipment 101 is required to transmit a location update message to the network at regular intervals even if it does not change its location. This message is used by the system to verify that the user equipment is still present in the system even if it is not active. In the GSM cellular communications system of FIG. 1, the time interval between transmission of such periodic location/routing area updates can be set to be between 1 and 255 deci-hours, i.e. between 6 minutes and 25.5 hours. The time interval is controlled using a timer, T3212. The timeout value is broadcasted in the L3-RR SYSTEM INFORMATION TYPE 3 message on the BCCH. When the T3212 time expires, the new location update message must be transmitted to the network 103 and accordingly the update processor 203 proceeds to generate the location update message and feed it to the transceiver 201 which then transmits it to the base station 105. The base station 105 forwards the message to the BSC 107 which further transmits it to the VLR 109.

It will be appreciated that in other embodiments, other control channel messages may be transmitted and used instead of (or as well as) the location update message. For example, in some embodiments (typically for GPRS or UMTS cellular communication systems), a Routing Area Update (RAU) message may be used in the same way as described for the GSM Location Update message.

The update processor 203 is further coupled to a power-up unit 205 which is fed an indication that the location update message is transmitted to the network. In response, the power-up unit 205 proceeds to switch the user equipment 101 from a power-down mode to an active monitoring mode. The power-up unit 205 furthermore starts a timer which is used to control the duration in which the user equipment 101 remains in the active monitoring mode.

The update processor 203 is further coupled to a power-down unit 207. When the timer indicates that a given time interval has passed, the power-up unit 205 indicates this to the power-down unit 207. In response, the power-down unit 207 proceeds to switch the user equipment 101 from the active monitoring mode to the power-down mode. The user equipment 101 then remains in the power-down mode for at least one paging cycle (such as e.g. signalled from the network in the parameter BA_PA_MFRMS). In the specific example, the user equipment 101 remains in the power-down mode until the next time a location update message is transmitted.

Thus, the power-up unit 205 and the power-down unit 207 are arranged to enter the user equipment into the active monitoring mode for a time interval in response to the transmission of the control channel message, and to enter the user equipment into the power-down mode at the end of the time interval. It will be appreciated that in many embodiments, the power-up unit 205 and the power-down unit 207 may be implemented as an integrated function, such as e.g. as a single routine being executed by a suitable processing element.

The power-up unit 205 and the power-down unit 207 are coupled to a paging controller 209 which is arranged to monitor a paging channel from the base station 105. The paging channel is a downlink data channel that can transmit paging messages to the user equipments. The paging messages are transmitted from the network 103 in order to contact an idle user equipment. The paging message may specifically be an indication that the network 103 has received data for the user equipment 101 and that accordingly it is desired that a communication session is set up in order to download this data to the user equipment 101. In some scenarios, the paging message may be used to retrieve data from the user equipment 101. For example, for a machine-to-machine application, the paging message may be transmitted to the user equipment 101 in order for this to set up a communication session to upload data from the user equipment.

The paging controller 209 is controlled by the power-up unit 205 and the power-down unit 207 such that it monitors the paging channel in all paging cycles when in the active monitoring mode but not when in the power-down mode. Thus, when in the active monitoring mode, all paging cycles (and thus all time intervals in which a paging message may be sent to the user equipment 101) are monitored ensuring that any transmitted paging message will be received. When in the power-down mode, the user equipment 101 will only monitor the paging channel in a subset of the paging cycles (and thus not in all time intervals in which a paging message may be sent to the user equipment 101). This may result in a reduced chance of receiving paging messages but will also reduce power consumption and thus increase battery life etc. Indeed, in the specific example, the user equipment 101 does not monitor the paging channel in any of the paging cycles when in the power-down mode. Accordingly, the user equipment 101 will not be able to receive any paging messages outside the time interval following the transmission of the location update message. However, this further allows a substantial reduction in the power consumption for the user equipment 101 and thus a substantially increased battery life.

Specifically, when in the power-down mode, the power supply for the paging controller 209 may be switched off. As another example, the paging controller 209 may be arranged to switch off power for one or more functions of the transceiver 201. In particular, during the power-down mode, the paging controller 209 (or equivalently the power-down unit 207) may switch off the power supply to the entire receiver functionality thereby resulting in a very low power drain and accordingly long stand by time.

Thus, the user equipment 101 will be operated in a power-down mode except for very sporadic time intervals in which the paging channel is monitored. It will be appreciated that the power-down mode does not necessarily fully switch off any functionality but has reduced power consumption for at least some elements of the user equipment 101 relative to the power consumption of these elements when in the active monitoring operation.

When the location update message is received by the base station 105, it is forwarded to the BSC 107 which further forwards it to the VLR 109. The location update message can be detected for the purpose of synchronising paging messages in different ways. For example, the BSC 107 or VLR 109 may be arranged to generate an indication of the location message and transmit this to a suitable paging message controller (such as the paging unit described later). Thus, the detection that a location update message has been received from the user equipment 101 (and that accordingly paging messages may be transmitted thereto) may be performed in the BSC 107 or the VLR 109.

However, in the specific example, the network comprises a detection unit 111 which is arranged to monitor the interface communications between the BSC 107 and the VLR 109.

Specifically, the detection unit 111 may be arranged to monitor the communications from all base stations to the VLR 109. It may further comprise a list of user equipment identities for user equipments that have been designated to use the described reduced paging monitoring approach. Thus, whenever a location update message is received from a base station, the detection unit 111 proceeds to determine whether the location update message is received from a user equipment on the list.

The detection unit 111 is coupled to a paging unit 113 which is arranged to control the transmission of paging messages to user equipments on the list.

Specifically, when the detection unit 111 detects that a location update message has been transmitted from the user equipment 101 to the VLR 109, it informs the paging unit 113 of this detection.

When receiving the indication that the location update message has been detected, the paging unit 113 accordingly knows that the user equipment 101 will be monitoring the paging channel for a given time interval, such as for a predetermined number of paging cycles. The paging unit 113 accordingly ensures that any paging messages are transmitted within this time interval.

Specifically, the paging unit 113 determines whether any paging message should be sent to the user equipment 101, and if so it proceeds to transmit a paging message within the time interval in which it is known that the user equipment 101 monitors the paging channel.

For example, the paging unit 113 may itself include functionality for controlling, managing and interfacing the device supported by machine-to-machine communications from the user equipment 101. Accordingly, the paging unit 113 may in response to the detection of the location update message proceed to evaluate whether data should be downloaded to or retrieved from the user equipment 101 (or the device supported by the user equipment 101). If so, the paging unit 113 proceeds to generate a paging message and send it to the user equipment 101. For example, if the paging unit 113 has data available for the user equipment 101, the paging message may result in the user equipment 101 setting up a communication session allowing this data to be downloaded. Alternatively or additionally, the paging message may result in a communication session setup that can be used to upload e.g. measurement data to the paging unit 113. Thus, the paging unit 113 may use the paging message to request, control and obtain user data uploads from the user equipment 101 (or from the device supported by the user equipment 101).

In some embodiments, the paging unit 113 may e.g. operate as an intermediate between a remote controller for the user equipment 101 and/or the device supported by the user equipment 101.

In the example of FIG. 1, the paging unit 113 provides an interface between the cellular communication system and a device controller 115 which manages and controls the device supported by the user equipment 101. For example, the device controller 115 may be a meteorological center communicating with a plurality of geographically distributed weather stations via the cellular communication system.

In the example, the paging unit 113 may be part of the network and may be controlled and operated by the network operator. However, the device controller 115 may be external to the network and may be operated by a 3^{rd} party. E.g. the devices using the cellular communication system to provide a machine-to-machine communication service need not control, manage or even consider the operation of the communication service or system itself but may simply consider this to provide a bit pipe with a set of predetermined Quality of Service parameters (such as a guaranteed maximum data rate and delay).

In the example, the device controller 115 may decide that new weather data is desired from one or more of the weather stations. Accordingly, it may submit a measurement data request message to be transmitted to the user equipment 101 to the paging unit 113. The paging unit 113 may then store this measurement data request message and set a flag to indicate that a paging message should be transmitted to the user equipment 101 at the next available opportunity.

When the paging unit 113 then detects that a location update message has been received from the user equipment 101, it proceeds to generate a paging message and send it to the user equipment 101. The paging message may specifically identify the device controller 115.

The user equipment 101 comprises a communication controller 211 which is coupled to the paging controller 209 and the transceiver 201. When the paging message is detected by the paging controller 209, the communication controller 211 is informed of this and is provided with the identification of the device controller 115 contained in the paging message. The communication controller 211 then proceeds to set up a communication session with the device controller 115.

The device controller 115 and the communication controller 211 then proceed to perform the required communication. For example, the device controller 115 may transmit a measurement data upload request command and the communication controller 211 may proceed to retrieve this data and upload it to the device controller 115. The communication session may then be terminated.

In some scenarios, the network may receive data for the user equipment 101 and may buffer this until a paging message can be sent to the user equipment 101 in order to set up a communication session.

For example, the device controller 115 may feed downlink data for the user equipment 101 to the paging unit 113. The downlink data may for example be operational data or control data for the function supported by the machine-to-machine communication service provided by the user equipment 101.

The paging unit 113 may be coupled to a data buffer 117 which proceeds to store the data for the user equipment 101 until this can be downloaded. Specifically, the paging unit 113 may store the data until a location update message from the user equipment 101 is detected. It may then proceed to transmit a paging message resulting in a communication session being set up. This communication session may for example be directly between the user equipment 101 and the paging unit 113. The paging unit 113 may then proceed to retrieve the stored data and download it to the user equipment 101. Thus, in such examples, the paging unit 113 may be arranged to not only generate and transmit the paging message at suitable times but may also implement the actual communication and download of data. This may be advantageous in many scenarios as the device controller 115 may simply feed the data to download to the user equipment 101 but need not consider any aspects of the communication protocol or approach itself.

The paging unit 113 may in addition be arranged to determine whether to transmit a paging message or not depending on a characteristic of the data stored in the data buffer 117. Thus, the paging message may be dependent on the data of the data buffer 117 meeting a given criterion. As a simple example, a paging message may only be sent if more than a given amount of data has been buffered for the user equipment 101.

It will be appreciated that the paging message and the functions and procedures for sending the paging message may follow the routines and protocols defined in the technical specifications and used for other paging messages (such as for traditional paging of mobile phones).

Thus, in the system, the timing of paging messages is not dependent on when the network or system desires to contact the user equipment 101 but rather is controlled by the times at which the user equipment 101 actually monitors the paging channel. In the example, the paging unit 113 only transmits paging messages to the user equipment 101 following the detection of the control channel message from the user equipment 101, i.e. in the time interval in which it is known that the user equipment 101 is monitoring for paging messages. This synchronisation of the monitoring of the paging channel and the transmission of the paging message is achieved using control channel messages that are transmitted from the user equipment 101 for other purposes, and thus does not require any additional signalling.

In the example, the user equipment 101 is arranged to only monitor for paging channels during a predetermined time interval following the transmission of the control channel message. Similarly, the network 101 only transmits paging messages in the predetermined time interval following the detection of the control channel message. However, it will be appreciated that in some embodiments or scenarios, the user equipment may additionally monitor the paging channel in other time intervals. For example, if a specific condition occurs or at a specific time, the user equipment 101 may also be arranged to enter the active monitoring mode. This may be known by the network 101 which may accordingly transmit a paging message during such intervals.

It will be appreciate that the timing and duration of the time interval in which the user equipment 101 monitors the paging channel may depend on the preferences and requirements of the individual embodiment and may indeed by dynamically varied. However, in most embodiments particularly advantageous performance tends to be achieved for a duration of the paging time interval of less than 30 seconds and with a repetition duration between subsequent transmissions of the control channel message being not less than 2 hours. Such timings tend to provide attractive trade-offs between the delay and data requirements for a machine-to-machine communication service and the power drain for the user equipment 101.

In the specific example, the user equipment 101 proceeds to setup a new communication session when it receives a new paging message. This communication session can then be used to upload or download data from or to the user equipment 101. Thus, in many embodiments, the paging message is a very short message that merely indicates a request for a communication session set-up. However, in some embodiments, the paging message may be extended to also include user data.

For example, in some machine-to-machine communication applications, the device controller 115 may only download a few hundred bytes for every paging message interval cycle. In such cases, the paging message may comprise a user data field in which the user data can be included. This may in many scenarios provide sufficient download data capacity thereby avoiding the need for the user equipment to initiate a communication session. Thus, an even more efficient operation can be achieved with even further reduced power drain for the user equipment 101.

In the described example, the transmission of the control channel message is a periodically occurring event which is dependent only on the timing that has been configured for the transmission of the control channel message. It will be appreciated that in some embodiments, the user equipment 101 may not enter the active monitoring mode every time the control channel message is transmitted but may for example only enter the active monitoring mode for every other transmission of the control channel message.

Also, in some embodiments, the control channel message may additionally or alternatively be transmitted in response to a detection of a specific event occurring. Thus, in some embodiments the transmission of the control channel message (and the associated monitoring of the paging channel) may be asynchronous and may not be periodic.

Specifically, the user equipment 101 may be arranged to receive (including itself making) measurements. The measurements may specifically relate to the operation performed by the user device. For example, the measurement may indicate that a malfunction has occurred.

In such embodiments, if one or more of the measurements meet a specific criterion, the user equipment 101 may proceed to generate the control channel message and transmit it to the base station 105.

Such an approach may provide additional flexibility in many embodiments. For example, a slow periodic transmission of control channel messages and monitoring of the paging channel may be applied. However, if an unusual situation arises, a control channel message may be transmitted for the specific purpose of allowing the control device 115 to communicate with the user equipment 101.

The previous description has focussed on an example wherein the (idle) user equipment 101 operated in only two modes, namely the power-down mode and the active monitoring mode. However, in other embodiments, the user equipment 101 may possible operate in other modes for some or all of time.

Also, in the described example, the user equipment 101 will not monitor the paging channel at all during the power-down mode. However, in other embodiments, the user equipment 101 may monitor the paging channel in some paging cycles but not in other paging cycles when in the power down mode. For example, when in the power-down mode, the user equipment 101 may monitor every tenth, hundredth or thousandth paging cycle.

It will also be appreciated that the user equipment 101 does not need to remain in the specific power-down mode until next time a suitable control channel message is sent. Indeed, in some embodiments, it may also be arranged to occasionally enter the active monitoring mode without a control channel message being sent. For example, if a measurement indicates an alarm, the user equipment 101 may enter the active monitoring mode in order to be available if an unexpected paging message should be sent to it.

However, common for the described examples is that (at least sometimes) when a control channel message is transmitted, the user equipment 101 enters (from any previous mode) an active monitoring mode wherein all paging cycles are monitored for a time interval. At the end of that time interval, it enters a power-down mode wherein the paging channel is not monitored for all paging cycles. The power-down mode has a duration of at least one paging cycle (resulting in at least one paging cycle not being monitored).

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

## Claims

1. A user equipment for a cellular communication system, the user equipment comprising:
means for generating a control channel message;
a transmitter for transmitting the control channel message to a network of the cellular communication system;
means for entering the user equipment into an active monitoring mode for a time interval in response to the transmission of the control channel message,
power-down means for entering the user equipment into a power-down mode at the end of the time interval for a period longer than a paging cycle; and
monitoring means arranged to monitor a paging channel for paging messages when in the active monitoring mode, and to not monitor the paging channel in all paging cycles when in the power-down mode.

2. The user equipment of claim 1 wherein the control channel message is a location update message.

3. The user equipment of claim 1 further comprising means for initiating a communication session in response to receiving a paging message in the time interval.

4. The user equipment of claim 1 wherein the control channel message is a periodic update message.

5. The user equipment of claim 1 arranged to only monitor the paging channel in time intervals following transmission of the control channel messages.

6. The user equipment of claim 1 wherein a duration of the time interval is less than 30 seconds.

7. The user equipment of claim 1 wherein a repetition duration between subsequent transmissions of the control channel message is not less than 2 hours.

8. The user equipment of claim 1 further comprising means for receiving a measurement value; and the user equipment is arranged to transmit the control channel message in response to the measurement value meeting a criterion.

9. A network for a cellular communication system comprising:
means for detecting that a control channel message is received by the network from a user equipment; and
paging means arranged to transmit a paging message to the user equipment in a predetermined time interval following detection of the control channel message.

10. The network of claim 9 further comprising:
a data buffer for storing data for the user equipment;
and wherein the paging means is arranged to transmit the paging message in response to data of the data buffer meeting a first criterion.

11. The network of claim 9 wherein the paging means is arranged to transmit paging messages to the user equipment only in predetermined time intervals following detections of the control channel message.

12. The network of claim 9 wherein the paging means is arranged to include at least some user data in the paging message.

13. A cellular communication system comprising a network and at least one user equipment, wherein
the at least one user equipment comprises:
means for generating a control channel message,
a transmitter for transmitting the control channel message to a network of the cellular communication system,
means for entering the user equipment into an active monitoring mode for a time interval in response to the transmission of the control channel message,
power-down means for entering the user equipment into a power-down mode at the end of the time interval for a period longer than a paging cycle, and
monitoring means arranged to monitor a paging channel for paging messages when in the active monitoring mode, and to not monitor the paging channel in all paging cycles when in the power-down mode; and
the network comprises:
means for detecting that the control channel message is received by the network, and
means arranged to transmit a paging message to the user equipment in response to a detection of the control channel message.

14. A method of operation for a user equipment for a cellular communication system, the method comprising:
generating a control channel message;
transmitting the control channel message to a network of the cellular communication system;
entering the user equipment into an active monitoring mode for a time interval in response to the transmission of the control channel message,
entering the user equipment into a power-down mode at the end of the time interval for a period longer than a paging cycle; and
monitoring a paging channel for paging messages when in the active monitoring mode, and not monitoring the paging channel in all paging cycles when in the power-down mode.

15. A method of operation for a network of a cellular communication system comprising:
detecting that a control channel message is received by the network from a user equipment; and
transmitting a paging message to the user equipment in a predetermined time interval following detection of the control channel message.
